Europäisches Patentamt

European Patent Office

Office européen des brevets

(19)

(11) Veröffentlichungsnummer: **0 106 073**
**A2**

(12) # EUROPÄISCHE PATENTANMELDUNG

(21) Anmeldenummer: **83108308.4**

(22) Anmeldetag: **23.08.83**

(51) Int. Cl.³: **H 04 M 15/28**

(30) Priorität: **14.09.82 DE 3234087**

(43) Veröffentlichungstag der Anmeldung:
**25.04.84 Patentblatt 84/17**

(84) Benannte Vertragsstaaten:
**AT BE CH DE FR GB IT LI LU NL SE**

(71) Anmelder: **Wilhelm Sedlbauer GmbH**
**Quagliostrasse 6**
**D-8000 München 90(DE)**

(72) Erfinder: **Luh, Hans-Jürgen**
**Herterichstrasse 51**
**D-8000 München 71(DE)**

(74) Vertreter: **Seibert, Rudolf, Dipl.-Ing.**
**Tattenbachstrasse 9**
**D-8000 München 22(DE)**

(54) Gebührenzähler mit Belegdrucker.

(57) Die Erfindung bezieht sich auf einen Gebührenzähler zur Anzeige der bei einer Fernmeldeverbindung anfallenden Gebühren in Verbindung mit einem Belegdrucker.

Der Gebührenzähler arbeitet mit zwei im wesentlichen gleich aufgebauten voll funktionsfähigen Mikroprozessoren, von denen einer als Hauptprozessor und der andere als Nebenprozessor eingesetzt ist. Er besitzt ein Display zur Anzeige der während des Gespräches auflaufenden bzw. über einen Zeitraum aufgelaufenen Gebühren sowie einem Belegdrucker, der die das Gespräch kennzeichnenden Daten nach Abschluß einer Verbindung ausdruckt.

Das Gerät ist als Zusatzgerät für Fernsprechapparate konzipiert, und kann bei Haupt- und Nebenanschlüssen unmittelbar eingesetzt werden.

EP 0 106 073 A2

0106073

## Gebührenzähler mit Belegdrucker

Die vorliegende Erfindung bezieht sich auf einen Gebührenzähler zur Anzeige der bei einer Fernmeldeverbindung, insbesondere einer Fernsprechverbindung, anfallenden Gebühren in Kombination mit einem Belegdrucker, der die aufgelaufenen Gebühren nach Abschluß der Verbindung ausdruckt.

Gebührenzähler und Gebührenanzeigegeräte sind in verschiedensten Ausführungsformen bekannt. Dabei ist es im besonderen bekannt, mit Hilfe eines Zeigergerätes oder auch eines Rollenzählers die Anzahl der Gebühreneinheiten fortlaufend zu zählen und damit dem Anschlußinhaber am Ende einer Verbindung, z.B. eines Telefongespräches, die Möglichkeit zu geben durch Multiplikation mit der Gebühr pro Einheit den aufgelaufenen Preis für einen bestimmten Zeitabschnitt (Dienststunden, Tag, Monat usw.) zu ermitteln.

Es sind auch, insbesondere in Verbindung mit großen Nebenstellenanlagen Gebührendrucker bekannt geworden, die am Ende einer Verbindung alle wesentlichen Daten der Verbindung sowie die aufgelaufenen Gebühren und sonstige Kriterien ausdrucken.

Derartige Gebührendrucker werden vielfach in Hotels, großen Industrieunternehmen usw. eingesetzt.

Bedarf besteht an einem handlichen Gerät, das neben einem Haupt- oder auch einem Nebenanschluß einer Fernsprechanlage die für eine Fernsprechverbindung charakteristischen Daten sowie die aufgelaufenen Gebühren unmittelbar am Ende des Gespräches festhält und ausdruckt. Dieser Bedarf ist im besonderen überall dort gegeben, wo von ein- und demselben Anschluß aus eine Vielzahl von Gesprächen geführt werden muß, die aber verschiedenen Kostenträgern zuzuordnen sind, wobei ein Beleg erstellt werden soll, der auch den angerufenen Teilnehmer und damit eine spätere Überprüfbarkeit erkennen läßt.

Im besonderen besteht dementsprechend dieser Bedarf in Hotels, bei denen dem Gast bei der Verrechnung der Gebühreneinheiten möglichst nicht nur pauschal deren Zahl, sondern die Anzahl der Gespräche mit allen Kriterien geliefert werden soll.

Ebenso ist dieser Bedarf beispielsweise auch in Dienstleistungsbüros, wie z.B. Anwaltskanzleien gegeben, weil auch dort vielfach Telefongespräche für die verschiedensten Kunden bzw. Mandanten geführt werden, die aus Abrechnungsgründen auch möglichst genau erfaßt werden sollen.

Aufgabe der Erfindung ist es deshalb, ein Gerät zu schaffen, das als in sich abgeschlossenes, kleines und handliches Gerät jedem einzelnen Telefonapparat ohne besonderen Aufwand zugeordnet werden kann, und das sowohl der telefonierenden Person beim Wählen einer Verbindung die Rufnummer zur Kontrolle und während des Gespräches und/oder in einem vorgegebenen Zeitabschnitt die aufgelaufenen Ge- bühren auf einem Display wiedergibt und am Ende eines Ge- spräches einen Beleg ausdruckt, aus dem alle wesentlichen Kriterien des Gespräches ersichtlich sind.

Dabei soll ein derartiges Gerät die Bedienung des Telefonapparates in keiner Weise beeinflußen und insbesondere so arbeiten, daß während des Gespräches, aber auch bei Aufeinanderfolge von verschiedenen Gesprächen keinerlei Rücksicht zu nehmen ist.

Darüberhinaus soll das Gerät von der Bedienungsperson unabhängig arbeiten und nach einer einmal durchgeführten Einstellung nicht mehr verstellt oder beeinflußt werden können.

Diese Aufgabe wird mit einem Gebührenzähler mit den Merkmalen des Patentanspruches 1 gelöst.

Der Gebührenzähler zur Anzeige der bei einer Fernmeldeverbindng anfallenden Gebühren gemäß der Erfindung, bei dem voraussetzungsgemäß die gewählte Rufnummer sowie die während des Gespräches und/oder in einem vorgegebenen Zeitabschnitt aufgelaufenen Gebühren auf einem Display aufgezeigt werden, und der mit einem das Gespräch zumindest hinsichtlich der angefallenen Gebühren registrierenden Belegdrucker ausgerüstet ist, besitzt zwei im wesentlichen gleich aufgebaute, voll funktionsfähige Mikroprozessoren, von denen einer als Hauptprozessor (Masterprozessor) und der andere als Nebenprozessor (Slaveprozessor) eingesetzt ist. Die beiden Prozessoren arbeiten parallel und sind miteinander direkt über einen Datenbus zum Austausch der die Wahlinformation enthaltenden Daten sowie zur Übertragung von Steuer- und Synchronisierungssignalen miteinander verbunden, wobei beiden Prozessoren gemeinsam zur wahlweisen Ansteuerung ein Speicher, insbesondere ein RAM-Speicher so zugeordnet ist, daß jeder der Prozessoren Zugriff zu den einzelnen gemeinsam benötigten Daten hat.

Durch diese Organisation des Gebührenzählers mit Belegdrucker wird in erster Linie erreicht, daß nach Abschluß einer Verbindung und vor Abschluß des Druckvorganges der jeweils nach Beendigung eines Gespräches automatisch eingeleitet wird, ohne besondere Wartezeiten von der Bedienungsperson (Teilnehmer) eine neue Verbindung hergestellt werden kann.

Gemäß einem weiteren Merkmal der Erfindung ist dabei das
die entsprechenden Informationen zumindest während des
Gespräches wiedergebende Display mit einer eigenen Treiberanordnung versehen, wobei der Treiberanordnung die
jeweils anzuzeigenden Daten sowohl vom Hauptprozessor
als auch vom Nebenprozessor zuführbar sind, während dem
Drucker die auszudruckenden Daten ausschließlich vom
Nebenprozessor zugeführt werden.

Gemäß einer Weiterbildung des Erfindungsgedankens werden·
bei dieser Organisation alle Eingaben mit Ausnahme der
gewählten Rufnummer, also sowohl die für die Grundeinstellung und das Programmieren des Gerätes notwendigen Daten
als auch die zur Anzeige notwendigen Daten, wie Gebührenimpulse usw. dem Hauptprozessor eingegeben. Lediglich
die Kennung der Rufnummer, die im allgemeinen von den
vom Anschlußapparat abgegebenen Wahlimpulsen entnommen
wird, wird vom Nebenprozessor ermittelt.

Im Interesse eines übersichtlichen und einfachen Aufbaues
erfolgt der Datenaustausch zwischen den Prozessoren, dem
Speicher und dem Treiber für das Display seriell. Lediglich die Datenverbindung zwischen Treiber und Display
bzw. dem Nebenprozessor und dem Drucker erfolgt in einer
Paralleldarstellung der einzelnen Zeichen.

Einzelheiten einer Ausfürhungsmöglichkeit eines Gebührenzählers nach der Erfindung werden im folgenden in Verbindung mit der anliegenden Zeichnung, die ein Blockschaltbild eines derartigen Gebührenzählers wiedergibt, erläutert.

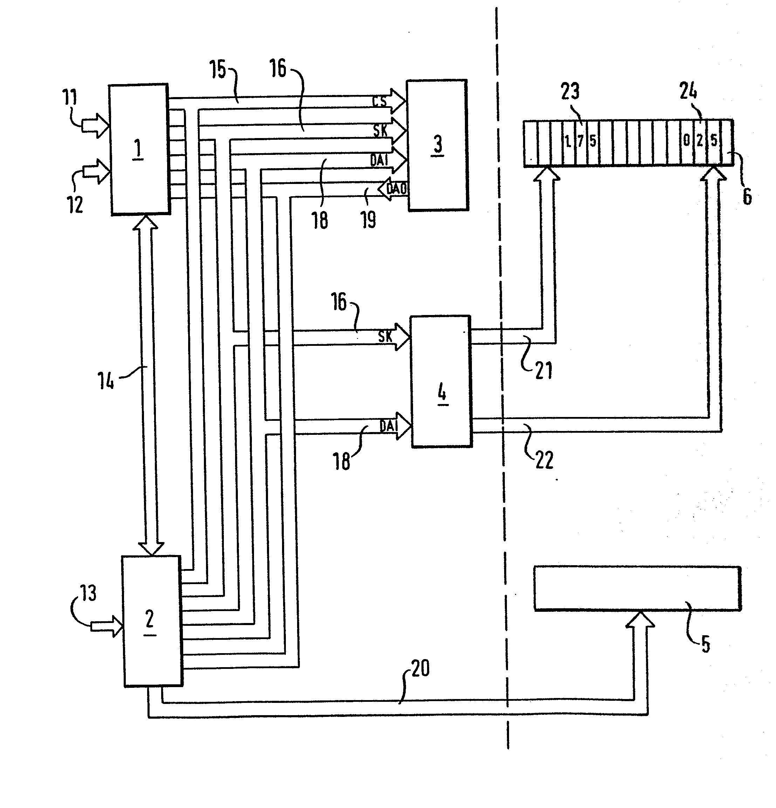

In der Zeichnung ist schematisch ein Gebührenzähler mit
Belegdrucker in Form eines Blockschaltbildes wiedergegeben, wie er gemäß den Merkmalen nach der vorliegenden Erfindung aufgebaut sein kann.

Dabei sind in der linken Hälfte die zentralen Schaltungsteile und Elemente enthalten, während auf der rechten Seite die peripheren Geräte, nämlich ein Display und ein Drucker, wiedergegeben sind. In der Fig. sind mit 1 und 2 zwei Mikroprozessoren bezeichnet, die im wesentlichen identisch aufgebaut sind. Bei der gewählten Ausführungsform arbeitet der Mikroprozessor 1 als Hauptprozessor (Masterprozssor), d.h. vom Mikroprozessor 1 aus wird das gesamte Gerät, soweit notwendig, synchronisiert und auch gesteuert. Der Mikroprozessor 2 arbeitet als Nebenprozessor (Slave-Prozessor), wie im einzelnen noch erläutert wird.

Beide Prozessoren sind über mehrere Daten- und Steuerleitungen, wie im einzelnen noch erläutert wird, mit einem für beide Prozessoren gemeinsamen Speicher, und zwar einem freien RAM-Speicher 3 verbunden.

Es sei schon hier angemerkt, daß diese Prozessoren nach der sog. SLEEP-Mode arbeiten, also nur dann aktiviert werden, wenn an einem der zyklisch abgetasteten Eingänge eine Änderung auftritt.

Voraussetzungsgemäß ist ein Belegdrucker 5 sowie ein Anzeigedisplay vorgesehen, dem die Informationen von einem Treiber 4, einem sog. intelligenten LCD-Treiber, zur Anzeige zugeführt werden.

Bei dem Drucker 5 handelt es sich bei dem gewählten Ausführungsbeispiel um einen Nadeldrucker, der die einzelnen Zeichen in einem 5 x 7 Punkteraster wiedergibt. Sowohl der Drucker 5 als auch das Display 6 sind mindestens 16-stellig, wobei das Display durch ein 4 x MUX LCD-Display realisiert wird.

Dem Hauptprozessor 1 sind zwei schematisch mit 11 und 12 gekennzeichnete Eingabemöglichkeiten zugeordnet, wobei über den Eingang 11 von beispielsweise einem Tastenfeld oder einem anderen auch von Hand zu bedienenden peripheren Eingabegerät kommende Daten eingegeben werden. Hierbei handelt es sich um die Daten zur Einstellung der Uhrzeit, der Tageszeit sowie der Grundgebühr für eine Gesprächseinheit, wie sie von der einzelnen Bedienungsperson gewünscht wird. Dabei kann die Grundgebühr freigewählt werden, was ermöglicht, sowohl die von der Postverwaltung in Rechnung gestellte Gebühr oder aber auch eine frei wählbare Gebühr, wie dies vielfach in Hotels usw. geschieht, einzugeben.

Über diesen Eingang werden dann auch die Rückstellbefehle eingegeben.

Es empfiehlt sich, vorzugsweise in Verbindung mit Nebenstellenanlagen, die Eingabemöglichkeit über ein Schloß oder dgl. derart zu sichern, daß sowohl Grundgebühr, aber auch Rückstellinformationen nur von dem Inhaber des Schloßschlüssels möglich ist.

Dabei kann das Schloß als mechanisches Schloß aber auch als elektrisches Sicherheitsschloß ausgebildet sein.

Über den Eingang 12 werden die für die Anzeige notwendigen Informationen, wie beispielsweise die Zählimpulse für die Gebührenanzeige während des Arbietens des Mikroprozessors 1 jeweils eingegeben. Auch die Tatsache der Herstellung einer Verbindung erfolgt über den Eingang 12 wodurch das gesamte Gerät jeweils entsprechend aktiviert wird.

Über einen Eingang 13 erhält der Nebenprozessor die jeweilige Wahlinformation, die im Nebenprozessor 2 entsprechend ausgewertet und interpretiert wird. Die Schaltung zur Abtastung der Wahlinformationen, die vom Gerät beim Abgeben der Wählsignale durch den Teilnehmerapparat übernommen wird, ist nicht Gegenstand der vorliegenden Erfindung und kann in an sich bekannter Weise auf verschiedene Weise erfolgen.

Hauptprozessor und Nebenprozessor sind über einen Datenbus 14 unmittelbar miteinander verbunden. Über diesen Datenbus werden sowohl die die gerufene Rufnummer kennzeichnenden Daten als auch Takt- und Steuersignale unmittelbar übertragen.

Der darüberhinaus notwendige Datentransport erfolgt über und in Verbindung mit dem Speicher 3, wie durch vier Datenbusse 15, 16, 18 und 19 angedeutet. Dabei führt der Datenbus 15 vom Hauptprozessor 1 aber auch vom Nebenpro-zessor 2 die für den Programmablauf notwendigen Synchronisierimpulse CS und der Bus 16, der ebenfalls Synchronisierungssignale überträgt, die für den Datentransport notwendige Taktfrequenz SK.

Bei dem gewählten Ausführungsbeispiel arbeitet das Gerät mit einer Haupt- oder Masterfrequenz von ca. 2 MHz, während der Datentransport mit einer Frequenz von ca. 125 kHz seriell erfolgt.

Da die Daten auch parallel zu der Treiberstufe 4 geführt werden müssen, um sie auf dem Display anzeigen zu können, ist der Synchronisierbus 16 auch zu der Treiberstufe 4 geführt.

Die zu verarbeitenden und wiederzugebenden Informationen werden auf dem Datenbusleitungen 18 und 19 transportiert, und zwar auf der Datenbusleitung 18 die Daten DAI, die vom Hauptprozessor 1 bzw. Nebenprozessor 2 zu dem Speicher 3 geführt werden, und auf der Datenbusleitung 19 die Daten DA O, die vom Speicher zu den beiden Prozessoren geführt werden sollen.

Von den Prozessoren ausgehende Daten werden, wie noch später erläutert wird, ausgewählt auf dem Display 6 angezeigt. Dementsprechend hat der von den Prozessoren ausgehende Datenbus 18 auch eine Abzweigung zu der Treiberstufe 4.

Die am Ende eines Gespräches vom Drucker 5 wiederzugebenden Daten werden diesem über den Datenbus 20 zugeführt und zwar unmittelbar in einer durch den Nebenprozessor 2 aufbereiteten Form in Paralleldarstellung. Dementsprechend benötigt der Datendrucker keine Verbindung zur zentralen Taktversorgung.

Das Display 6, einem, wie schon ausgeführt, 16-stelligen 4 x MUX LCD-Display, werden die anzuzeigenden Daten über die beiden Busleitungen 21 und 22 in an sich bekannter Weise im Vielfach zur Anzeige zugeführt.

Für die folgende Erläuterung sind auf dem Display in zwei Bereichen 23 und 24 zwei Zahlenangaben, nämlich bei 23 1,75 und bei 24 0,25 wiedergegeben.

Diese Zahlenangaben geben beispielsweise die Grundgebühr für eine Einheit (Ortsgespräch) von DM 0,25 (Bereich 24) an, während die aufgelaufene Gebühr über einen größeren Zeitraum beispielsweise mit DM 1,75 (also beispielsweise 7 Ortsgespräche) wiedergegeben ist (Bereich 23).

Ein gemäß vorstehender Erläuterung aufgebauter Gebührenzähler mit Belegdrucker arbeitet im wesentlichen wie folgt:

Beim Einstellen eines Gerätes, beispielsweise am Beginn eines bestimmten Zeitabschnittes wird abhängig von einem Tastenfeld über den Eingang 11 zunächst die zu berechnende Grundgebühr einer Gesprächseinheit sowie genaue Uhrzeit und Datum eingegeben. Diese Werte werden gespeichert bzw. bei der Uhrzeit entsprechend weiterverarbeitet. Solange kein Gespräch eingeleitet wird, werden Uhrzeit und Datum auf dem Display ständig angezeigt, und zwar vorzugsweise das Datum im Bereich 23 und die Uhrzeit im Bereich 24.

Sobald das Gerät arbeiten muß, weil der entsprechende Teilnehmer den Hörer abgenommen und damit zunächst eine Verbindung mit dem entsprechenden Amt oder der Zentrale hergestellt hat, wird das Gerät über den Eingang 12 zur Gebührenanzeige aktiviert. Dies bedeutet, daß der Hauptprozessor dem Nebenprozessor 2 mitteilt, daß in Kürze Wahlimpulse auftreten, die entsprechend ausgewertet werden müssen. Diese Tätigkeit übernimmt der Nebenprozessor 2, indem er eine Rufnummererkennung über den Eingang 13 vornimmt und Daten über die Rufnummer sowohl dem Hauptprozessor 1 als auch dem Speicher 3 über den Datenbus 18 und der Treiberstufe 4 zur Wiedergabe auf dem Display 6 zuführt. Das Display 6 ist bei der Aktivierung von dem Hauptprozessor 1 über den intelligenten LCD-Treiber 4 entsprechend vorbereitet, d.h. Datums- und Uhrzeitangaben, sind unterdrückt.

Sobald die gewünschte Verbindung hergestellt ist, wird auf dem Display 6 und zwar im Bereich 24 die jeweils angefallene Gebühr wiedergegeben, wobei - nach Eintreffen des ersten Impulses bei einem Ortsgespräch, bei dem keine Gebührenimpulse auftreten - die Grundgebühr angezeigt wird, während bei Auftreten von Gebührenkriterien am Eingang 12 die entsprechende Grundgebühr jeweils aufaddiert und so die für ein Gespräch aufgelaufene Gebühr angezeigt wird.

Im Bereich 23 des Display 6 wird dabei die während eines Zeitraumes, beispielsweise über einen Tag aus verschiedenen Gesprächen aufgelaufene Gebührensumme wiedergegeben.

Nach Gesprächsende, was ebenfalls vom Hauptsprozessor

über den Eingang 12 ermittelt wird, wird vom Hauptprozessor aus der Nebenprozessor 2 aufgefordert, die für das Gespräch n, das sind beispielsweise Datum, Uhrzeit, gewählte Rufnummer und für das Gespräch aufgelau-fene Gebühr (mit oder ohne inzwischen aufgelaufener Gesamtan den Drucker 5 zum Ausdrucken, zu geben.

Sobald vom Hauptprozessor 1 dieser Befehl an den Prozessor 2 gegeben ist, ist der Hauptprozessor 1 wieder in der Lage ein weiteres Gespräch hinsichtlich der Gebühren festzuhalten und anzuzeigen. Der Druckablauf erfolgt hiervon unabhängig.

Der Gebührenzähler nach der Erfindung wurde anhand eines schematisch wiedergegebenen Ausführungsbeispieles erläutert. Für den Fachmann ist ersichtlich, daß bei der gewählten Organisation mit Hauptprozessor und Nebenprozessor eine Reihe von Abwandlungen und zusätzlichen Fasilities möglich sind, ohne den Rahmen der Erfindung zu verlassen.

So können beispielsweise über den Eingang 11 auch während eines Gespräches auf dem Display 6 Datums- und Uhrzeitangaben wiedergegeben werden, wenn beispielsweise der Teilnehmer, aus welchem Grund auch immer, diese Information benötigt. In diesem Fall bleibt dann die Gebührenanzeige gespeichert und wird im Speicher 3 entsprechend fortgeschaltet. Dabei empfiehlt es sich über die Treiberstufe 4 das Display so zu steuern, daß beim Auftreten der nächsten Informationsänderung, d.h. eines weiteren Gebührenimpulses und/oder einer anderen Information, z.B. Beendigung des Gespräches, die Gebührenanzeige automatisch wieder sichtbar wird.

P a t e n t a n s p r ü c h e

1. Gebührenzähler zur Anzeige der bei einer Fernmeldeinsbesondere Fernsprechverbindung anfallenden Gebühren mit einem die gewählte Rufnummer sowie die
während des Gespräches und/oder in einem vorgegebenen Zeitabschnitt aufgelaufenen Gebühren wiedergebenden Display, vorzugsweise mit LCD-Anzeige, sowie
einem das Gespräch zumindest hinsichtlich der angefallenen Gebühr registrierenden Belegdrucker unter
Verwendung eines Mikroprozessors, dem der für eine
Gebühreneinheit anfallende Betrag eingebbar ist und
über den abhängig von Zeitkriterien, insbesondere
Gebührenimpulsen, die aufgelaufene Gebühr errechnet
wird, gekennzeichnet durch das Zusammenwirken folgender Bau- und Funktionselemente

a) zwei im wesentlichen gleich aufgebaute, voll
funktionsfähige Mikroprozessoren (1,2), von denen
einer (1) als Haupt (Master-) prozessor und der
andere (2) als Neben- (Slave-) prozessor eingesetzt ist und die miteinander direkt über einen
Datenbus(14) zum Austausch der die Wahlinformation
enthaltenden Daten sowie zur Übertragung von
Steuer- und Synchronisiersignalen, miteinander
verbunden sind und denen gemeinsam zur wahlweisen
Ansteuerung von beiden Prozessoren Speicher (3)
zugeordnet sind;

b) ein Display (26) mit einer Treiberanordnung (4),
dem anzuzeigenden Daten (gewählte Rufnummer sowie
Gebührenanzeigen) sowohl vom Hauptprozessor (1)
als auch vom Nebenprozessor (2) zuführbar sind,

c) und einem Drucker (5), der ausschließlich vom Nebenprozessor (2) steuerbar (20) ist und dem die auszudruckenden Daten von diesem Prozessor zugeführt werden.

2. Gebührenzähler nach Anspruch 1, dadurch gekennzeichnet, daß die Dateneingabe (11, 12) mit Ausnahme der durch Abtasten der Wahlimpulse gewonnenen Daten (13) über den Hauptprozessor (1) erfolgt, während die Wahlinformation dem Nebenprozessor (2) eingegeben wird.

3. Gebührenzähler nach Anspruch 1 oder 2, dadurch gekennzeichnet, daß der Datenaustausch zwischen den Prozessoren (1, 2), Speicher (3) und Treiber (4) für das Display seriell und zum Display (6) und Drucker (5) parallel erfolgt.

4. Gebührenzähler nach einem der Ansprüche 1 bis 3, dadurch gekennzeichnet, daß die Taktversorgung für den Datentransport zwischen den einzelnen Bau- und Funktionselementen vom Hauptprozessor synchronisiert ist.

5. Gebührenzähler nach Anspruch 1 bis 4, dadurch gekennzeichnet, daß das Anzeigedisplay zumindest während der Pausen, in denen keine Gebührenanzeige benötigt wird, zur Anzeige von Datums- und/oder Urzeitangaben eingesetzt ist.

6. Gebührenzähler nach Anspruch 5, dadurch gekennzeichnet, daß auch während der Gebührenfassung einer Fernmeldeverbindung das Anzeigedisplay zur Wiedergabe von Datums- und Uhrzeitangaben umschaltbar einsetzbar ist, wobei eine Rückumschaltung auf die Gebührenanzeige mit dem Auftreten der nächsten Gebühreneinheit selbsttätig erfolgt.

7. Gebührenzähler nach einem der Ansprüche 1 bis 6, dadurch gekennzeichnet, daß dem Drucker außer den zur Kennung einer Fernmeldeverbindung (Wahlinformation) und deren Gebührenanzeige notwendigen Informationen, zur Wiedergabe in Verbindung mit dieser Information auch Datums- und Uhrzeitangaben zuführbar sind.

8. Gebührenzähler nach Anspruch 7, dadurch gekennzeichnet, daß als Drucker ein Nadeldrucker mit einer Auflösung 5 mal 7 vorgesehen ist.

9. Gebührenzähler nach einem der vorhergehenden Ansprüche, dadurch gekennzeichnet, daß als Display ein 16-stelliges LCD für Vielfachmultiplexbetrieb vorgesehen ist.

10. Gebührenzähler nach einem der vorhergehenden Ansprüche, dadurch gekennzeichnet, daß der Speicher in sogenannter "sleep mode" betrieben ist.

11. Gebührenzähler nach einem der vorhergehenden Ansprüche, dadurch gekennzeichnet, daß zur Eingabe ein Tastenfeld vorgesehen ist, dessen Funktion hinsichtlich der Grundeinstellwerte, wie Grundgebühreneinheit, sowie einer Rückstellmöglichkeit der Gebührenanzeige ein Schloß zugeordnet ist.

0106073